# EUROPÄISCHE PATENTSCHRIFT

(11) **EP 0 758 619 B1**
(45) Veröffentlichungstag und Bekanntmachung des Hinweises auf die Patenterteilung: **09.12.1998**
(21) Anmeldenummer: 96101573.2
(22) Anmeldetag: 03.02.1996
(51) Int. Cl.: B65D 90/50, B65D 90/24, G01M 3/32, B65D 88/54, B67D 5/32

(54) **Behälter zur Lagerung von Flüssigkeiten**
Container for storing liquids
Récipient pour le stockage de liquides

(30) Priorität: 16.08.1995 DE 19530058
(43) Veröffentlichungstag der Anmeldung: 19.02.1997
(73) Patentinhaber: Walter Ludwig Behälter- und Stahlbau, 76327 Pfinztal (DE)
(72) Erfinder: Ludwig, Klaus D., D-76327 Pfinztal (DE)
(74) Vertreter: Dipl.-Ing. Heiner Lichti, Dr. rer. nat. Dipl.-Phys. Jost Lempert, Dipl.-Ing. Hartmut Lasch

(56) Entgegenhaltungen:
- DE-U- 8 803 960

## Beschreibung

Die Erfindung betrifft einen Behälter zur Lagerung von Flüssigkeiten, insbesondere von grundwassergefährdenden Flüssigkeiten, mit einer inneren Wandung und einer im Abstand dazu angeordneten äußeren Wandung und mit einer einen unteren Auslaß bildenden Rohrleitung, die von einem inneren Rohr und einem dieses umgebenden äußeren Rohr gebildet ist, wobei an dem dem Behälter abgewandten Ende des inneren Rohres eine Absperrarmatur angeordnet ist und das äußere Rohr in ein die Absperrarmatur dicht umgebendes Schutzgehäuse mündet und wobei die Zwischenräume zwischen den beiden Wandungen und zwischen den beiden Rohren sowie der Innenraum des Schutzgehäuses leckage-überwacht sind.

In derartigen doppelwandigen Behältern werden insbesondere aggressive Flüssigkeiten bzw. Flüssigkeitsmischungen gelagert, die für die Umwelt und das Grundwasser gefährlich sind, so daß sie an einem unkontrollierten Austritt zuverlässig gehindert werden müssen. Aufgrund des doppelwandigen Aufbaus und der Leckage-Überwachung kann eine Beschädigung der inneren Wandung frühzeitig festgestellt werden, so daß die Flüssigkeit aus dem Behälter abgepumpt werden kann, bevor sie an die Umgebung austritt.

Aus Sicherheitsgründen ist es bisher nicht zulässig, an den Behälter im unteren Bereich, d.h. unterhalb der Füllstandshöhe, eine einen Auslaß bildende Rohrleitung anzuschließen, da es bei dieser Konstruktion im Schadensfall zu einem im wesentlichen unkontrollierten Austritt der Flüssigkeit kommen könnte. Es ist deshalb üblich, die Flüssigkeit über einen oberen Auslaß insbesondere mittels einer Pumpe aus dem Behälter zu entnehmen. Dieses Vorgehen ist jedoch sehr aufwendig und somit kostenintensiv.

Des weiteren ist es bekannt, den gesamten Behälter in eine abgedichtete Wanne zu stellen, die im Schadensfall die austretende Flüssigkeit aufnehmen kann. Einerseits ist eine derartige Wanne jedoch nur für Flüssigkeiten geeignet, deren Dämpfe ungefährlich sind, und andererseits benötigt die Wanne einen relativ großen Bauraum, der üblicherweise nicht zur Verfügung steht.

In der DE 88 03 960 U1, von der im Oberbegriff des Anspruchs 1 ausgegangen wird, ist ein unterer Anschluß für einen doppelwandigen Behälter bekannt, der eine doppelwandige Rohrleitung umfaßt, deren inneres Rohr in einer Absperrarmatur endet, während das äußere Rohr sich zu einem Schutzgehäuse erweitert, das die Absperrarmatur umgibt. Stirnseitig ist das Schutzgehäuse mittels einer aufgesetzten Abdeckplatte verschlossen. Um Flüssigkeit aus dem Behälter zu entnehmen, muß die Abdeckplatte abgenommen und eine Entnahmeleitung angeschlossen werden. In diesem Zustand kann jedoch im Schadensfall Flüssigkeit nach außen im wesentlichen unkontrolliert austreten, so daß die erforderliche Sicherheit nicht gewährleistet ist.

Der Erfindung liegt die Aufgabe zugrunde, einen Behälter der genannten Art zu schaffen, bei dem auch bei Entnahme der Flüssigkeit über einen unteren Auslaß das unkontrollierte Austreten im Schadensfall zuverlässig vermieden ist.

Diese Aufgabe wird erfindungsgemäß bei einem Behälter der genannten Art dadurch gelöst, daß von der Absperrarmatur eine weiterführende Rohrleitung in abgedichteter Weise durch das Schutzgehäuse hindurch nach außen verläuft, daß in der weiterführenden Rohrleitung außerhalb des Schutzgehäuses zumindest eine Absperrvorrichtung angeordnet ist und daß die Absperrarmatur in ihre Schließstellung vorgespannt und mittels einer Steuervorrichtung entgegen der Vorspannung in die Offenstellung bringbar ist, wenn zumindest die Absperrvorrichtung geöffnet und keine Leckage in den überwachten Räumen feststellbar ist.

Erfindungsgemäß ist somit das Schutzgehäuse auch im Fall einer Flüssigkeitsentnahme vollständig geschlossen und die Absperrarmatur wird durch eine außenliegende Steuervorrichtung geschaltet. Dabei wird jedoch zunächst geprüft, ob die in der weiterführenden Rohrleitung eingebaute Absperrvorrichtung, bei der es sich ebenfalls um eine Absperrarmatur bekannten Aufbaus handeln kann, geöffnet ist. Dies kann in bevorzugter Ausgestaltung der Erfindung dadurch geschehen, daß der Absperrvorrichtung ein Stellungssensor zugeordnet ist, mittels dessen die Stellung der Absperrvorrichtung erfaßbar ist. Wenn die Absperrvorrichtung vollständig geöffnet ist, gibt der Stellungssensor ein entsprechendes Stellungssignal an die Steuervorrichtung. Bei vorliegendem Stellungssignal, d.h. geöffneter Absperrvorrichtung, liegt ein Zustand vor, bei dem eine Entnahme von Flüssigkeit und somit ein Öffnen der Absperrarmatur beabsichtigt ist.

Des weiteren wird jedoch erfindungsgemäß zunächst überprüft, daß in den überwachten Räumen, d.h. dem Zwischenraum zwischen den beiden Wandungen des Behälters, dem Zwischenraum zwischen den beiden Rohren der Rohrleitung sowie im Innenraum des Schutzgehäuses keine Leckage aufgetreten ist. Dies kann in vorteilhafter Ausgestaltung der Erfindung dadurch erreicht werden, daß die Räume mittels eines Leckagesensor überwacht werden, mit dem eine Leckage festgestellt werden kann. Der Leckagesensor gibt entsprechende Signale an die Steuervorrichtung, die Aufschluß über das Vorhandensein oder Nicht-Vorhandensein einer Leckage geben.

Erst wenn zumindest die beiden oben genannten Bedingungen erfüllt sind, wird die Absperrarmatur von der Steuervorrichtung geöffnet. Dies kann entweder pneumatisch oder elektrisch erfolgen.

Die Absperrarmatur ist in ihrem Normalzustand vorzugsweise mittels einer Feder in die Schließstellung vorgespannt und kann nur bei Vorliegen der genannten Bedingungen geöffnet werden. Wenn während der Entnahme von Flüssigkeit sich eine der Bedingungen ändert, kehrt die Absperrarmatur aufgrund ihrer Vorspannung selbstätig in die Schließstellung zurück.

In bevorzugter Ausgestaltung der Erfindung sind weitere Bedingungen vorgesehen, die eingehalten werden müssen, damit die Steuervorrichtung die Absperrarmatur öffnen kann.

Beispielsweise kann ein Brandsensor vorgesehen sein, mittels dessen ein übermäßiger Temperaturanstieg in der Umgebung des Behälters festgestellt werden kann und der ein entsprechendes Brandsignal an die Steuervorrichtung abgibt. Wenn die Steuervorrichtung ein Brandsignal empfängt, d.h. wenn in der Umgebung des Behälters ein Brand auftritt, bleibt die Absperrarmatur in ihrer Schließstellung oder kehrt unverzüglich in diese zurück.

Zusätzlich oder alternativ dazu kann ein Antriebssensor vorgesehen sein, mittels dessen das Vorhandensein von Antriebsenergie für die Stellbewegung der Absperrarmatur feststellbar ist. Wenn beispielsweise die Antriebsenergie für die Absperrarmatur ausfällt, gibt der Antriebssensor ein entsprechendes Signal an die Steuervorrichtung ab. Bei Vorhandensein eines Energiesignals bleibt die Absperrarmatur in ihrer Schließstellung oder kehrt in diese zurück.

Um die in dem Schutzgehäuse gekapselte Absperrarmatur über einen längeren Zeitraum zuverlässig antreiben zu können, sind die Anschlußleitungen der Absperrarmatur vorzugsweise in abgedichteter Weise durch die Wandung des Schutzgehäuses hindurchgeführt und bestehen aus einem widerstandsfähigen Material, das insbesondere der im Behälter befindlichen Flüssigkeit standhält.

Als Antrieb für die Absperrarmatur hat sich die Verwendung von Druckluft bewährt, wobei zwischen einer Druckluftquelle und der Absperrarmatur ein steuerbares Ventil, insbesondere ein Magnetventil angeordnet ist.

Aus Sicherheitsgründen ist es vorteilhaft, in der weiterführenden Rohrleitung zwei Absperreinrichtungen hintereinander anzuordnen. Vorzugsweise wird die Stellung beider Absperreinrichtungen überwacht, wobei sich die Absperrarmatur nur dann öffnen läßt, wenn beide Absperreinrichtungen geöffnet sind.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1:: eine teilweise geschnitten dargestellte Seitenansicht des Behälters,
- Figur 2:: einen Schnitt im Bereich der Absperrarmatur,
- Figur 3:: einen Schnitt des Anschlußbereichs der Rohrleitung an den Behälter gemäß einem ersten Ausführungsbeispiel,
- Figur 4:: eine Figur 3 entsprechende Darstellung gemäß einem zweiten Ausführungsbeispiel und
- Figur 5:: ein Schaltschema für den Behälter.

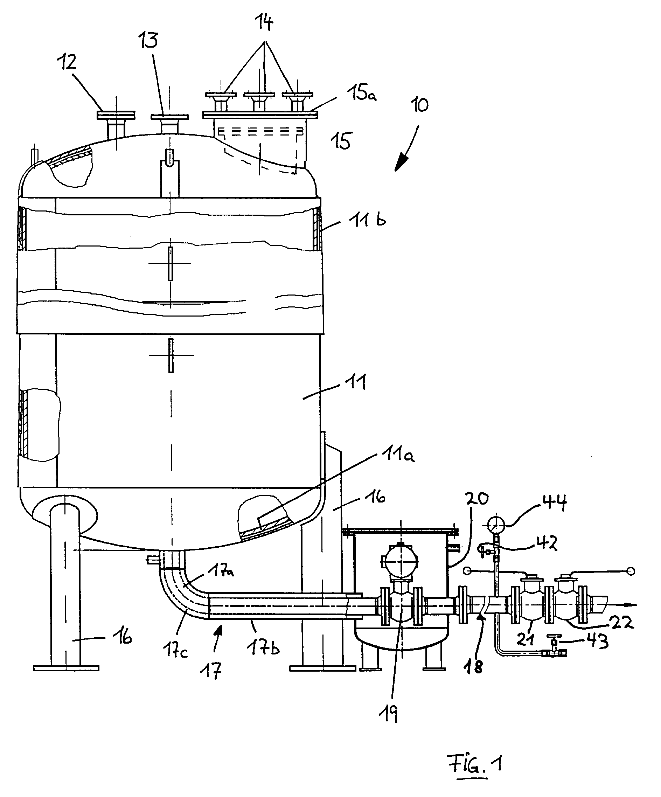

Gemäß Figur 1 weist ein Behälter 10 zur Lagerung von insbesondere wassergefährdenden Flüssigkeiten ein im wesentlichen geschlossenes Behälterteil 11 auf, das über Fußkonstruktionen 16 am Boden abgestützt ist. In seinem oberen Bereich weist das Behälterteil 11 einen Anschluß 12 für einen Probestab sowie einen Anschluß 13 für eine Belüftung auf. Des weiteren ist im oberen Bereich des Behälterteils ein Einstiegs- und Besichtigungsschacht 15 vorgesehen, der im Normalzustand mit einer Verschlußplatte 15a abgedeckt ist, in der mehrere Anschlüsse 14 zum Befüllen des Behälterteils ausgebildet sind.

Das Behälterteil 11 besitzt zumindest bis zu einer vorbestimmten Höhe, die oberhalb der maximalen Füllhöhe des Behälterteils 11 liegt, einen doppelwandigen Aufbau aus einer inneren Wandung 11a und einer im Abstand dazu angeordneten äußeren Wandung 11b. Zwischen der inneren Wandung 11a und der äußeren Wandung 11b ist ein Zwischenraum 11c gebildet, der in bekannter Weise hinsichtlich einer Leckage überwacht ist. Im dargestellten Ausführungsbeispiel ist das Behälterteil 11 insgesamt doppelwandig ausgebildet.

Im unteren Bereich des Behälterteils 11 schließt eine Rohrleitung 17 an, die einen unteren Auslaß für das Behälterteil 11 bildet und ein inneres Rohr 17a sowie ein äußeres Rohr 17b aufweist, das das innere Rohr 17a mit Abstand umgibt, so daß zwischen den beiden Rohren 17a und 17b ein Zwischenraum 17c gebildet ist, der ebenfalls hinsichtlich einer Leckage überwacht ist.

An dem dem Behälterteil 11 abgewandeten Ende des inneren Rohres 17a ist eine Absperrarmatur 19 angeordnet, an die eine weiterführende Rohrleitung 18 anschließt, die einwandig ausgebildet ist. Sie kann alternativ jedoch auch doppelwandig ausgebildet sein. In der weiterführenden Rohrleitung 18 sind zwei Absperreinrichtungen in Form von manuell oder motorisch betätigbaren Armaturen 21 und 22 hintereinanderliegend angeordnet. Den Armaturen 21 und 22 vorgeordnet sind in der Rohrleitung 18 zwei Absperrhähne bzw. -armaturen 42 und 43 angeordnet, deren einer Absperrhahn 42 mit einem Druckmeßgerät 44 wie einem Manometer verbunden ist.

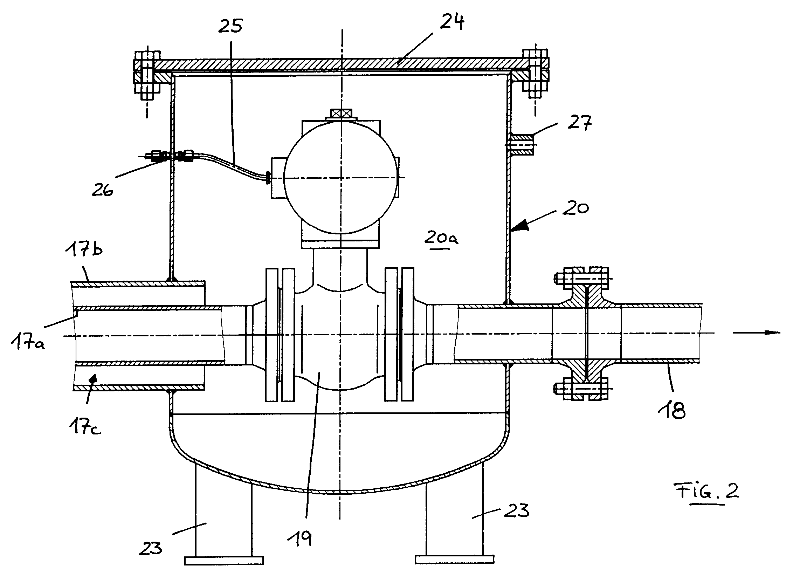

Die Absperrarmatur 19 ist in flüssigkeitsdichter Weise von einem Schutzgehäuse 20 umgeben, wie insbesondere Figur 2 zu entnehmen ist. Das Schutzgehäuse 20 ist topfförmig ausgebildet und über Fußkonstruktionen 23 am Boden abgestützt. Das äußere Rohr 17b der Rohrleitung 17 durchdringt die Wandung des Schutzgehäuses 20 und ist mit dieser in fluiddichter Weise verschweißt. Auf diese Weise mündet das äußere Rohr 17b in dem Schutzgehäuse 20 und dessen Innenraum 20a steht mit dem Zwischenraum 17c der Rohrleitung 17 in Verbindung. Die weiterführende Rohrleitung 18 durchdringt die Wandung des Schutzgehäuses 20 ebenfalls in fluiddichter Weise und auf das Schutzgehäuse 20 ist ein im Normalzustand fluiddicht befestigter Deckel 24 aufgeschraubt, so daß die Absperrarmatur 19 vollständig gekapselt ist.

Die Absperrarmatur 19 ist in nicht näher dargestellter Weise motorisch oder pneumatisch verstellbar, wobei von der Absperrarmatur 19 Anschlußleitungen 25 mittels einer dichten, medienbeständigen Durchführung 26 durch die Wandung des Schutzgehäuses 20 hindurchgeführt sind, so daß die Absperrarmatur 19 an eine außenliegende Antriebsquelle anschließbar ist.

Da der Innenraum 20a des Schutzgehäuses 20 mit dem Innenraum 17c der Rohrleitung 17 verbunden ist, wird er ebenfalls hinsichtlich einer Leckage überwacht. In dem Schutzgehäuse 20 ist zu diesem Zweck eine Muffe 27 für einen Leckanzeiger vorgesehen.

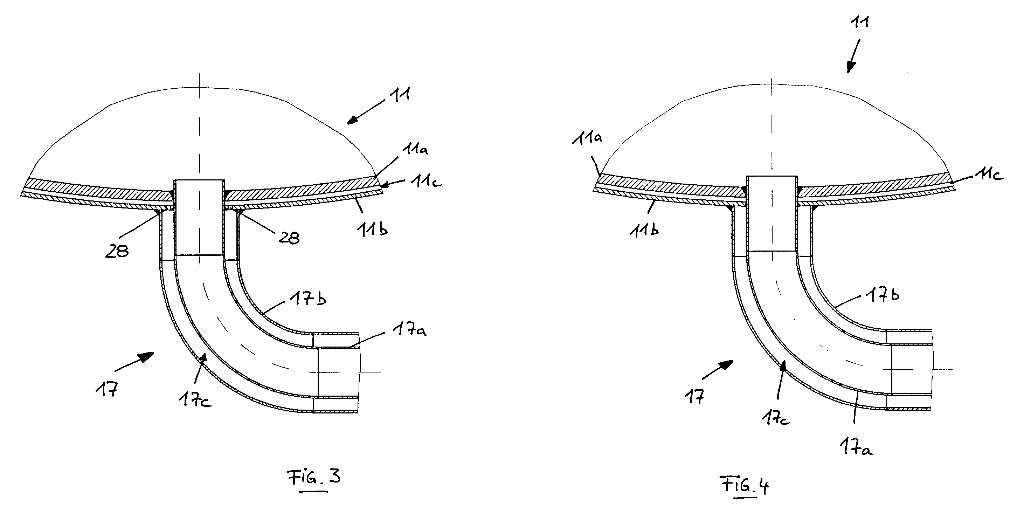

Figur 3 zeigt den Anschluß der Rohrleitung 17 an das Behälterteil 11. Wie der Darstellung zu entnehmen ist, ist das innere Rohr 17a durch die beiden Wandungen 11a und 11b des Behälterteils 11 hindurchgeführt und jeweils mit diesen dicht verschweißt. Das äußere Rohr 17b der Rohrwandung 17 ist außenseitig auf die äußere Wandung 11b aufgesetzt und ebenfalls mit dieser dicht verschweißt. Nahe der Durchdringung des inneren Rohrs 17a sind in der äußeren Wandung 11b des Behälterteils 11 Durchgangsbohrungen 28 ausgebildet, die den Zwischenraum 11c zwischen den beiden Wandungen 11a und 11b mit dem Zwischenraum 17c zwischen den beiden Rohren 17a und 17b verbinden. Auf diese Weise ist ein einheitlicher Leckage-Überwachungsraum gebildet, der durch ein einzelnes Leckage-Anzeigegerät überwacht werden kann.

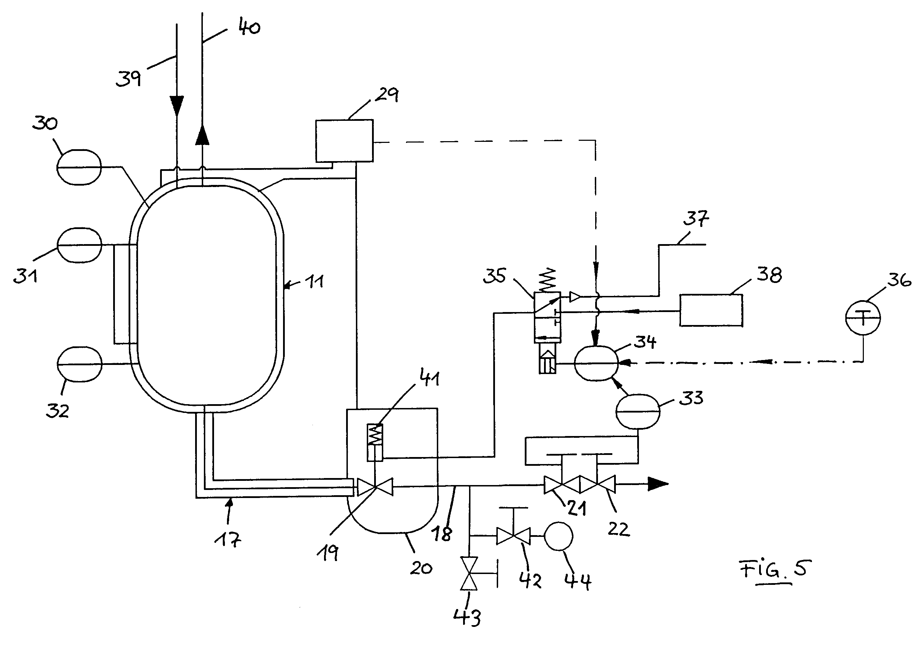

Figur 4 zeigt eine alternative Ausgestaltung, bei der die Durchgangsbohrungen 28 nicht vorhanden sind. Somit ist der Zwischenraum 11c zwischen den beiden Wandungen 11a und 11b des Behälterteils 11 vollständig von dem Zwischenraum 17c zwischen den Rohrwandungen 17a und 17b getrennt, so daß die beiden Zwischenräume jeweils hinsichtlich einer Leckage überwacht werden müssen.

Figur 5 zeigt das Schaltschema für den erfindungsgemäßen Behälter. Das Behälterteil 11 weist eine Befülleitung 39 und eine Entlüftungsleitung 40 im oberen Bereich auf. Des weiteren ist eine Überfüllsicherung 30, eine Füllstandsanzeige 31 sowie eine Temperaturanzeige 32 in bekannter Weise vorgesehen. Der Zwischenraum 11c zwischen den beiden Wandungen 11a und 11b des Behälterteils 11 sowie der Zwischenraum 17c zwischen den beiden Rohren 17a und 17b mit dem Innenraum 20a des Schutzgehäuses 20 sind an ein Leckageanzeigegerät 29 angeschlossen, das bei Vorhandensein einer Leckage ein entsprechendes Leckagesignal an eine Steuervorrichtung 34 abgibt. Die beiden in der weiterführenden Rohrleitung 18 angeordneten Absperreinrichtungen 21 und 22 weisen Stellungssensoren 33, beispielsweise Endlagesensoren auf, mit denen feststellbar ist, ob die beiden Absperreinrichtungen 21 und 22 sich in der geöffneten Stellung befinden. Die Stellungssensoren 33 geben ein entsprechendes Signal an die Steuervorrichtung 34 ab. Zusätzlich dazu ist ein Temperaturfühler 36 vorgesehen, der die Temperatur in dem den Behälter umgebenden Lagerraum erfaßt, wodurch Brände etc. festgestellt werden können. Der Temperatursensor 36 gibt ebenfalls ein entsprechendes Signal an die Steuervorrichtung 34 ab.

Die Steuervorrichtung 34 steht mit einem steuerbaren Ventil 35 in Verbindung, das in einer Anschlußleitung zwischen einer Druckluftquelle 38 und der Absperrarmatur 19 angeordnet ist. Des weiteren ist eine Entlüftungsleitung 37 vorgesehen, über die die Absperrarmatur 19 entlüftet werden kann.

Die Absperrarmatur 19 steht in ihrem Normalzustand unter Wirkung einer Feder 41, die sie in der geschlossenen Stellung hält. Wenn ein Benutzer Flüssigkeit aus dem Behälterteil 11a entnehmen will, muß er beide Absperreinrichtungen 21 und 22 öffnen. Das Öffnen der Absperreinrichtungen 21 und 22 wird durch den Stellungssensor 33 erfaßt und an die Steuervorrichtung 34 gemeldet. Die Steuervorrichtung 34 überprüft zunächst, ob in den überwachten Räumen 11c, 17c und 20a eine Leckage vorliegt und/oder ob im Lagerraum eine übermäßige Temperatur herrscht. Wenn keine Leckage vorliegt und keine übermäßige Temperatur festgestellt wird, öffnet die Steuervorrichtung 34 das Ventil 35, so daß Druckluft aus dem Druckluftspeicher 38 über die Anschlußleitung zu der Absperrarmatur 19 gelangen kann und diese entgegen der Wirkung der Feder 41 öffnet. Somit kann der Benutzer Flüssigkeit aus dem Behälterteil 11 entnehmen. Bei Beendigung der Entnahme schließt der Benutzer zumindest eine der Absperreinrichtungen 21 bzw. 22, was über den Stellungssensor 33 erfaßt und an die Steuervorrichtung 34 gemeldet wird, die daraufhin das steuerbare Ventil 35 schließt, so daß die Absperreinrichtung 19 aufgrund der Kraft der Feder 41 in ihre Schließstellung zurückkehrt.

Gegebenenfalls kann auch vor Öffnen der Absperrarmatur 19 überprüft werden, ob für deren Betätigung ausreichend Energie, d.h. im vorliegenden Fall Druckluft, vorhanden ist. Wenn ein Mangel an Energie festgestellt wird, bleibt die Absperrarmatur in der sperrenden Stellung.

Um die Dichtigkeit und Funktionsfähigkeit in der weiterleitenden Rohrleitung 18 zu überprüfen, werden in festen Zeitabständen Druckprüfungen mittels der Absperrhähne 42, 43 und dem Manometer 44 durchgeführt.

## Patentansprüche

1. Behälter zur Lagerung von Flüssigkeiten, insbesondere von grundwassergefährdenden Flüssigkeiten, mit einer inneren Wandung und einer im Abstand dazu angeordneten äußeren Wandung und
mit einer einen unteren Auslaß bildenden Rohrleitung, die von einem inneren Rohr und einem dieses umgebenden äußeren Rohr gebildet ist,
wobei an dem dem Behälter abgewandten Ende des inneren Rohres eine Absperrarmatur angeordnet ist und das äußere Rohr in ein die Absperrarmatur dicht umgebendes Schutzgehäuse mündet und
wobei die Zwischenräume zwischen den beiden Wandungen und zwischen den beiden Rohren sowie der Innenraum des Schutzgehäuses leckage-überwacht sind,
dadurch gekennzeichnet, daß von der Absperrarmatur (19) eine weiterführende Rohrleitung (18) in abgedichteter Weise durch das Schutzgehäuse (20) hindurch nach außen verläuft, daß in der weiterführenden Rohrleitung (18) außerhalb des Schutzgehäuses (20) zumindest eine Absperrvorrichtung (21,22) angeordnet ist und daß die Absperrarmatur (19) in ihre Schließstellung vorgespannt und mittels einer Steuervorrichtung entgegen der Vorspannung in die Offenstellung bringbar ist, wenn zumindest die Absperrvorrichtung (21,22) geöffnet und keine Leckage in den überwachten Räumen feststellbar ist.

2. Behälter nach Anspruch 1, gekennzeichnet durch einen Stellungssensor (33), mittels dessen die Stellung der Absperrvorrichtung (21,22) erfaßbar ist und der ein entsprechendes Stellungssignal an die Steuervorrichtung (34) gibt.

3. Behälter nach Anspruch 1 oder 2, gekennzeichnet durch einen Leckagesensor (29), mittels dessen eine Leckage in den überwachten Räumen feststellbar ist und der ein entsprechendes Leckage-Signal an die Steuervorrichtung (34) gibt.

4. Behälter nach einem der Ansprüche 1 bis 3, gekennzeichnet durch einen Brandsensor (36), mittels dessen ein übermäßiger Temperaturanstieg in der Umgebung des Behälters feststellbar ist und der ein entsprechendes Brandsignal an die Steuervorrichtung (34) gibt.

5. Behälter nach Anspruch 4, dadurch gekennzeichnet, daß die Absperrarmatur (19) bei vorliegendem Brandsignal in der Schließstellung gehalten ist.

6. Behälter nach einem der Ansprüche 1 bis 5, gekennzeichnet durch einen Antriebssensor, mittels dessen das Vorhandensein von Antriebsenergie für die Stellbewegung der Absperrarmatur feststellbar ist und der bei Energieausfall ein entsprechendes Energiesignal an die Steuervorrichtung gibt.

7. Behälter nach Anspruch 6, dadurch gekennzeichnet, daß die Absperrarmatur bei vorliegendem Energiesignal in der Schließstellung gehalten ist.

8. Behälter nach einem der Ansprüche 1 bis 7, dadurch gekennzeichnet, daß die Absperrarmatur mittels einer Feder (41) vorgespannt ist.

9. Behälter nach einem der Ansprüche 1 bis 8, dadurch gekennzeichnet, daß die Absperrarmatur pneumatisch oder elektrisch betätigbar ist, wobei die Anschlußleitungen (25,26) der Absperrarmatur (19) in abgedichteter Weise durch das Schutzgehäuse (20) hindurchgeführt sind.

10. Behälter nach einem der Ansprüche 1 bis 9, dadurch gekennzeichnet, daß die Steuervorrichtung ein steuerbares Ventil (35) aufweist.

11. Behälter nach einem der Ansprüche 1 bis 10, dadurch gekennzeichnet, daß zwei Absperreinrichtungen (21, 22) in der weiterführenden Rohrleitung (18) hintereinander angeordnet sind.

## Claims

1. Container for storing liquids, particularly ground water-polluting liquids, having an inner wall and an outer wall spaced therefrom and with a pipeline forming a lower outlet and which is formed by an inner pipe and an outer pipe surrounding the latter, in which on the end remote from the container of the inner pipe is arranged a shutoff valve and the outer pipe issues into a protective casing closely surrounding the shutoff valve and in which the gaps between the two walls and between the two pipes, as well as the inner space of the protective casing are monitored for leaks, characterized in that, from the shutoff valve (19), a continuing pipeline (18) passes in sealed manner through the protective casing (20) to the outside, that in the continuing pipeline (18), outside the protective casing (20), is provided at least one shutoff device (21, 22) and that the shutoff valve (19) is pretensioned in its closed position and, counter to the pretension, can be brought by means of a control device into the open position, if at least the shutoff device (21, 22) is opened and no leak can be detected in the monitored spaces.

2. Container according to claim 1, characterized by a position sensor (33), by means of which it is possible to detect the position of the shutoff device (21, 22) and which delivers a corresponding position signal to the control device (34).

3. Container according to claim 1 or 2, characterized by a leak sensor (29), by means of which a leak can be detected in the monitored spaces and which delivers a corresponding leak signal to the control device (34).

4. Container according to one of the claims 1 to 3, characterized by a fire sensor (36), by means of which it is possible to detect an excessive temperature rise in the environment of the container and which delivers a corresponding fire signal to the control device (34).

5. Container according to claim 4, characterized in that the shutoff valve (19) is held in the closed position in the presence of a fire signal.

6. Container according to one of the claims 1 to 5, characterized by a drive sensor, by means of which it is possible to detect the presence of drive power for the adjusting movement of the shutoff valve and which, in the case of a power supply failure, delivers a corresponding power signal to the control device.

7. Container according to claim 6, characterized in that the shutoff valve is kept in the closed position when a power signal is present.

8. Container according to one of the claims 1 to 7, characterized in that the shutoff valve is pretensioned by means of a spring (41).

9. Container according to one of the claims 1 to 8, characterized in that the shutoff valve is pneumatically or electrically operable, the connecting lines (25, 26) of the shutoff valve (19) passing in sealed manner through the protective casing (20).

10. Container according to one of the claims 1 to 9, characterized in that the control device has a controllable valve (35).

11. Container according to one of the claims 1 to 10, characterized in that two shutoff devices (21, 22) are successively arranged in the continuing pipeline (18).

## Revendications

1. Tank pour le stockage de liquides, en particulier pour des liquides ne devant pas être exposés aux risques provenant des eaux souterraines, composé d'une paroi intérieure, d'une paroi extérieure montée espacée de la paroi intérieure, d'une conduite tubulaire permettant une évacuation inférieure composée d'un tuyau intérieur et d'un tuyau extérieur entourant celui-ci, un organe d'arrêt est placé sur la partie du tuyau intérieur opposée au tank, le tuyau extérieur débouchant dans un carter de protection qui entoure de très près l'organe d'arrêt , l'espace entre les deux parois et entre les deux tuyaux ainsi que l'intérieur du carter étant surveillés pour la détection de fuite, caractérisé en ce qu'un tuyau (18) s'étende de l'organe d'arrêt (19) et passe étanche à travers le carter (20) pour mener vers l'extérieur, et en ce que la partie conduite tubulaire (18) placée à l'extérieur du carter (20) comporte au moins un dispositif de sectionnement (21,22) et en ce que l'organe d'arrêt (19) précontraint en position fermée puisse être amené en sens inverse de la précontrainte en position ouverte au moyen d'un dispositif de commande quand le dispositif de sectionnement (21,22) au moins est ouvert et qu'aucune fuite n'ait été détectée dans les espaces sous surveillance.

2. Tank selon la revendication 1, caractérisé en ce qu'un détecteur de position (33) permettant de déterminer la position du dispositif de sectionnement (21,22) fournit un signal approprié de position au dispositif de commande (34).

3. Tank selon l'une des revendications précédentes 1 ou 2, caractérisé en ce qu'un détecteur de fuite (29) permettant de constater les fuites dans les espaces sous surveillance fournit un signal approprié de fuite au dispositif de commande (34).

4. Tank selon l'une des revendications précédentes 1 à 3, caractérisé en ce qu'un détecteur de feu (36) permettant de constater une augmentation de température excessive survenant aux alentours du tank fournit un signal approprié d'incendie au dispositif de commande (34).

5. Tank selon la revendication 4, caractérisé en ce que l'organe d'arrêt (19) reste maintenu en position fermée en cas de signal d'incendie.

6. Tank selon l'une des revendications précédentes 1 à 5, caractérisé en ce qu'un détecteur d'actionnement permettant de détecter la présence d'énergie nécessaire pour effectuer le mouvement de réglage de l'organe d'arrêt fournit au dispositif de commande signal approprié correspondant lors d'un manque d'énergie.

7. Tank selon la revendication 6, caractérisé en ce que l'organe d'arrêt reste maintenu en position fermée lors d'un signal d'énergie précité.

8. Tank selon l'une des revendications précédentes 1 à 7, caractérisé en ce que l'organe d'arrêt est précontraint au moyen d'un ressort (41).

9. Tank selon l'une des revendications précédentes 1 à 8, caractérisé en ce que la commande de l'organe d'arrêt est soit électrique, soit pneumatique, les lignes de raccordement (25, 26) de l'organe d'arrêt passant étanches à travers le carter (20).

10. Tank selon l'une des revendications précédentes 1 à 9, caractérisé en ce que le dispositif de commande présente un clapet pilotable.

11. Tank selon l'une des revendications précédentes 1 à 10, caractérisé en ce que le tuyau (18) comporte deux dispositifs de sectionnements (21, 22) disposés l'un derrière l'autre.
